# EUROPÄISCHE PATENTSCHRIFT

(11) **EP 3 395 286 B1**
(45) Veröffentlichungstag und Bekanntmachung des Hinweises auf die Patenterteilung: **02.10.2019**
(21) Anmeldenummer: 18166143.0
(22) Anmeldetag: 06.04.2018
(51) Int. Cl.: A61C 7/08

(54) **HERSTELLUNGSVERFAHREN FÜR EINEN POSITIONER**
MANUFACTURING METHOD FOR A POSITIONER
PROCÉDÉ DE FABRICATION D'UN POSITIONNEUR

(30) Priorität: 26.04.2017 DE 102017108970
(43) Veröffentlichungstag der Anmeldung: 31.10.2018
(73) Patentinhaber: Fachlabor Dr. W. Klee für grazile Kieferorthopädie GmbH, 60386 Frankfurt am Main (DE)
(72) Erfinder: KLEE, Felix, 63755 Alzenau (DE)
(74) Vertreter: Metten, Karl-Heinz

(56) Entgegenhaltungen:
- GB-A- 2 518 198
- US-A1- 2006 008 760
- US-A1- 2015 305 830
- US-A1- 2016 278 882

## Beschreibung

Die Erfindung betrifft ein Herstellungsverfahren für einen Positioner. Die Erfindung betrifft ferner eine elastische Zahnabdruckform als Negativform zur Verwendung bei der Herstellung von einem Positioner. Auch betrifft die Erfindung die Verwendung von elastischen Kunststoffen für eine physische Negativform.

Positioner für Zähne finden Anwendung in der Kieferorthopädie und werden zur Feineinstellung der Zahnpositionen genutzt. Dabei werden die Zähne des Patienten in die optimale Position gebracht, wobei eine Grobeinstellung im Regelfall bereits vorher beispielsweise durch Einsatz von Zahnspangen erfolgt. Hierfür wird ein individuell angepasster Positioner hergestellt und über mehrere Monate hinweg regelmäßig im Mund des Patienten getragen.

Positioner als Hilfsmittel für die Feineinstellung von Zahnpositionen sind aus dem Stand der Technik bekannt.

Beispielsweise wird ein Positioner in der US 3,407,500 A offenbart. Dieser ist dafür ausgelegt und eingerichtet, mit den oberen und unteren Zahnreihen zu interagieren, wie dies bei Positioner allgemein üblich ist.

Ein weiterer Positioner ist in der US 4,370,129 A offenbart, wobei Teilbereiche des Positioners aus verschiedenen Materialien gefertigt sind.

In der US 4,055,895 A ist ein Positioner offenbart, der elastische Bänder umfasst, um eine Kontraktion zu bewirken.

Die US 2015/305830 A1 offenbart eine Vorrichtung zum Positionieren von Zähnen und ihre Anwendung bei der kieferorthopädischen Behandlungsplanung unter Verwendung einer Arbeitsstation. Hierbei werden 3D-Zahnmodelle aus Scandaten erstellt. Das 3D-Modell wird verwendet, um ein dreidimensionales zusammengesetztes physikalisches Gebissmodell unter Verwendung eines 3D-Druckgeräts oder eines 3D-Druckers zu erstellen.

Die US 2016/278882 A1 offenbart ein System zum Herstellen einer kundenspezifischen Vorrichtung für die kieferorthopädische Behandlung von Zähnen.

Die GB 2518198 A bezieht sich auf ein Verfahren zum Herstellen einer Dentalvorrichtung, wobei das Verfahren das Bereitstellen eines digitalen Datensatzes, der eine modifizierte Zahnanordnung für einen Patienten darstellt, umfasst sowie das Erzeugen eines Positivmodells der modifizierten Zahnanordnung durch Gießen der Form mit einem härtbaren Material.

Die US 2006/008760 A1 betrifft ein Verfahren zum Repositionieren von Zähnen von einer anfänglichen Zahnanordnung zu einer endgültigen Zahnanordnung. Das Repositionieren wird mit einem System bewerkstelligt, das eine Reihe von polymeren Schalenvorrichtungen umfasst, die konfiguriert sind, um die Zähne aufzunehmen und einzelne Zähne schrittweise in einer Reihe von aufeinanderfolgenden Schritten neu zu positionieren.

Ferner sind 3D-Drucker für die Zahntechnik bekannt, in welchen bioverträgliche Druckmaterialien eingesetzt werden. Besagte bioverträgliche Druckmaterialien sind oftmals weniger langlebig als herkömmliche Materialien der Zahntechnik und daher meist nicht für eine dauerhafte orale Anwendung geeignet. Beispielhaft sei das Material MED610 genannt, welches eine medizinische Zulassung nur für die zeitlich begrenzte orale Anwendung aufweist.

Nachteilig an den aus dem Stand der Technik bekannten Herstellungsverfahren für besagte individuell angepasste Positioner ist, dass diese sehr aufwendig und nicht hinreichend präzise sind. Oftmals ist der gesamte Verfahrensablauf ausschließlich von manuellen Arbeitsschritten geprägt.

Die Aufgabe der vorliegenden Erfindung ist es daher, die Nachteile des Stands der Technik zu überwinden und ein insbesondere verbessertes Herstellungsverfahren für Positioner bereitzustellen, bei dem die Positioner sehr genau an die optimale Position der Zähne angepasst sind.

Die Aufgabe wird durch ein Verfahren für die Herstellung von individuell angepassten Positionern für Zähne gelöst, umfassend die folgenden Schritte:
a) Scannen einer ersten physischen Form, welche vorzugsweise eine Positivform darstellt, in einer IST-Position der Zahnreihen und Erstellung einer virtuellen Positivform der IST-Position,
b) Verformen der virtuellen Positivform in der IST-Position, so dass die Zähne der virtuellen Positivform in eine SOLL-Position gebracht, d.h. Verformen der virtuellen Positivform, so dass die Zahnreihen von der IST-Position in eine SOLL-Position gebracht werden,
b2') digitale Modellierung einer virtuellen Negativform der SOLL-Position auf Basis der virtuellen Positivform der SOLL-Position, wobei der Schritt b2') zwischen Schritt b) und c) umfasst ist,
c) Drucken einer zweiten physischen Form in der SOLL-Position mittels 3D-Druck, insbesondere auf Basis der virtuellen Positivform in der SOLL-Position, wobei die zweite physische Form der SOLL-Position eine Negativform darstellt, welche auf Basis des Datensatzes der virtuellen Negativform der SOLL-Position gedruckt wird,
c2) Anfertigung einer Gussform auf Basis der zweiten physischen Form, wobei der Schritt c2) zwischen Schritt c) und d) umfasst ist, und
d) Erstellung einer dritten physischen Form in der SOLL-Position als Negativform unter indirekter, vorzugsweise zerstörungsfreier, Nutzung der zweiten physischen Form, wobei die dritte physische Form unter direkter Nutzung der Gussform gemäß Schritt c2) hergestellt wird.

Es hat sich gezeigt, dass mit dem vorstehend beschriebenen Verfahren besonders gut passende Positioner sehr effizient gefertigt werden können. Hierbei werden nicht die Positioner selbst mittels 3-D Druck erzeugt, sondern ein Hilfsmittel in Form einer zweiten physischen Form in der SOLL-Position, welche anschließend indirekt genutzt wird, um den Positioner fertigzustellen. Es hat sich gezeigt, dass die auf diesem Wege erzielten

Ergebnisse besser sind, als Positioner, die direkt zur Verwendung am Patienten ausgedruckt werden. Der erfindungsgemäße Positioner entspricht dabei der ggf. nachbearbeiteten dritten physischen Form gemäß Schritt d). Ein solcher Positioner für die Feinjustierung im Sinne der vorliegenden Erfindung umfasst einen Körper mit Vertiefungen für die obere und die untere Zahnreihe. Durch die Verformung am Computer lassen sich einfacher Korrekturen durchführen, als dies bei herkömmlichen manuellen Verfahren möglich ist.

Unter der zerstörungsfreien Nutzung der zweiten physischen Form, welche vorzugsweise vorgesehen ist, wird eine Nutzung verstanden, bei der die zweite physische Form zumindest soweit erhalten bleibt, dass sie für die Herstellung weiterer Positioner verwendet werden kann. Vorzugsweise wird die zweite physische Form überhaupt nicht verändert.

Es sind zahlreiche 3D-Druckverfahren für die vorliegende Erfindung grundsätzlich geeignet. Genannt seien hierbei selektives Lasersintern mit Pulver (SLS), Stereolithografie (SLA), Polygrafie, Fused Deposition Modeling (FDM), Selektives Laserschmelzen (SLM), 3D Printing (3DP) und Vakuumguss. Vorzugsweise werden jedoch Stereolithografie (SLA) oder Polygrafie verwendet. Als ganz besonderes geeignet hat sich die Polygrafie mittels UV-Licht erwiesen.

Die IST-Position der Zähne ist die Ausgangszahnstellung, welche nicht optimal ist und der Feineinstellung bedarf. Die SOLL-Position ist eine demgegenüber optimierte Zahnstellung, bei welcher die Zähne in einer besseren, vorzugsweise der optimalen, Position sind. Sinn und Zweck eines Positioners ist es demnach, die Zähne eines Menschen aus einer IST-Position in eine SOLL-Position zu verschieben. Dies erfolgt, indem der Positioner über einen längeren Zeitraum getragen wird.

Physisch ist eine Form im Sinne der vorliegenden Erfindung, die einen materiellen Körper aufweist, der Masse hat und Raum einnimmt. Dem steht die virtuelle Form gegenüber, welche im Speicher einer Datenverarbeitungseinrichtung hinterlegt ist und auf einem Computerbildschirm wiedergegeben werden kann. Vorzugsweise wird eine virtuelle Form, soweit sie in den Verfahrensschritten genannt wird, auch tatsächlich auf den Computerbildschirm während des jeweiligen Verfahrensschrittes wiedergegeben. Dies gilt insbesondere auch für Schritt b). Grundsätzlich ist es natürlich auch denkbar, dass Verfahrensschritte vollständig automatisiert im Computer ablaufen, so dass eine bildliche Wiedergabe überflüssig ist. Vorzugsweise ist jedoch ein manueller Eingriff zu Korrektur der SOLL-Position zumindest möglich. Eine digitale Modellierung ist ein Moellierung, die mit einer Datenverarbeitungseinrichtung, insbesondere am Computer mittels entsprechender Software, durchgeführt wird.

Der Begriff "Form" ist ein Oberbegriff für Positiv- und Negativformen als virtuelle oder physische Abbilder des dreidimensionalen menschlichen Gebisses. Die Negativform ist eine Form, die beispielsweise entstehen würde, wenn mit dem Gebiss ein Abdruck in einer Abformmasse erzeugt wird, so dass auf der Innenseite der Abformmasse die Oberfläche des Gebisses abgebildet ist. Eine Positivform im Sinne der vorliegenden Erfindung gibt das (ggf. verformte) menschliche Gebiss wieder, wobei die Zähne Erhebungen und nicht Vertiefungen sind. Im Fall der ersten physischen Form kann die Positivform ausnahmsweise auch das menschliche Gebiss selbst sein. Ein Positioner ist hingegen eine Negativform.

Gemäß Schritt a) ist das Scannen der ersten physischen Form, die vorzugsweise eine Positivform der IST-Position der Zahnreihen ist, erforderlich. Es hat sich gezeigt, dass die Scanvorlage für Schritt a) zweckmäßigerweise durch folgende Schritte erhalten wird:
a1) Bereitstellung eines physischen Gebissabdrucks der IST-Position der Zahnreihen als Negativform, insbesondere indem mindestens ein Löffel mit einem Zahnabformmaterial gefüllt wird, in welchem Zähne einen Abdruck hinterlassen,
a2) Erstellung einer ersten physischen Form der IST-Position der Zahnreihen, insbesondere aus Gips oder Kunststoff, mithilfe des physischen Gebissabdrucks als Vorlage.

Anschließend erfolgt das Scannen:
a3) Scannen der ersten physischen Form, die eine Positivform der IST-Position der Zahnreihen ist, und Erstellung einer ersten virtuellen Positivform der IST-Position.

Hierbei entspricht der Schritt a3) dem Schritt a) und ist nur der Vollständigkeit halber nochmals genannt.

Alternativ zu dem vorstehend genannten Verfahren kann es zweckmäßig sein, das Scannen in Schritt a) direkt am menschlichen Gebiss mit einem Intraoralscanner durchzuführen. Dies weist Vorteile auf, da Patienten teilweise keinen Zahnabdruck wünschen, insbesondere da dies einen Würgereflex auslösen kann. Auch können Arbeitsschritte gespart werden, indem die Zähne direkt mithilfe eines Intraoralscanners gescannt werden.

Um die dritte physische Form zu erhalten, sind grundsätzlich zwei Verfahrensvarianten denkbar. In einer ersten Verfahrensvariante erfolgt eine direkte Nutzung der zweiten physischen Form. Bei dem erfindungsgemäßen Verfahren erfolgt jedoch eine indirekte Nutzung der zweiten physischen Form, insbesondere ohne das 3D-Drucken einer Gussform. Eine indirekte Nutzung im Sinne der vorliegenden Erfindung bedeutet, dass die zweite physische Form nicht unmittelbar zur Herstellung der dritten physischen Form genutzt wird, sondern dass eine oder mehrere weitere Verfahrensschritte und/oder Formen zwischengeschaltet sind, insbesondere so dass die zweite und dritte physische Form nicht in Kontakt kommen müssen. Näheres wird nachstehend erläutert.

Eine Gussform im Sinne der vorliegenden Erfindung ist eine Hohlform, welche vorzugsweise zweiteilig ist und in die ein flüssiges oder pastenförmiges Material eingebracht werden kann. Es handelt sich um eine Positivform, da die Zahnreihen als Erhebungen ausgebildet sind. Zwar ist es grundsätzlich möglich, dass ein Kanal vorgesehen ist, über welchen die Flüssigkeit oder Paste eingeleitete werden kann, jedoch ist dieser vorzugsweise nicht erforderlich. Vielmehr werden die Hälften der Gussform in einer besonders geeigneten

Ausgestaltung getrennt mit einer pastenförmigen Mischung befüllt und dann zusammengepresst.

Besonders zweckmäßig ist es, wenn die, insbesondere mittels 3D-Druck in Schritt c) erzeugte, physische Gussform aus Metall oder einem mineralischen Werkstoff, insbesondere Polymergips, besteht oder umfasst. Besagte Materialien lassen sich ebenfalls im 3D-Druck-Verfahren herstellen. Der Vorteil dieser Variante ist, dass mit besonders wenigen Verfahrensschritten ein Positioner hergestellt werden kann. Es hat sich überraschenderweise gezeigt, dass die erfindungsgemäße indirekte Verfahrensvariante erhebliche Vorteile mit sich bringt. Insbesondere lassen sich noch detailliertere und exaktere Positioner fertigen, als bei der vorstehend beschriebenen ersten Verfahrensvariante. Das indirekte Verfahren ist dadurch gekennzeichnet, dass zwischen Schritt b) und c) der folgende Schritt umfasst ist:
b2') Digitale Modellierung einer virtuellen Negativform der SOLL-Position auf Basis der virtuellen Positivform der SOLL-Position,
wobei die zweite physische Form der SOLL-Position gemäß Schritt c) eine Negativform darstellt, welche auf Basis des Datensatzes der virtuellen Negativform gedruckt wird. Vorzugsweise folgt Schritt c) unmittelbar auf Schritt b2').Der Schritt b) kann auch als Schritt b1) bezeichnet werden, auf den der Schritt b2'), insbesondere unmittelbar, folgt.

Hierbei wird durch das 3D-Druckverfahren die zweite physische Form als Negativform erzeugt. Dies bedeutet auch, dass es nicht ohne weiteres möglich ist, mit, insbesondere silikonbasierten, Abformmaterialien die dritte physische Form unmittelbar aus der gemäß Schritt c) hergestellten zweiten physischen Form zu erzeugen, da die dritte physische Form auch eine Negativform ist. Abformtechniken erzeugen aus der Negativform unmittelbar nur die Positivform und umgekehrt gilt entsprechendes. Stattdessen hat es sich als vorteilhaft erwiesen, die Gussform als Positivform basierend auf der zweiten physischen

Form erst anschließend mit einem, insbesondere gipsbasierten, Abformmaterial zu erzeugen und dann zur Herstellung der dritten physischen Form zu nutzen.

Es ist bevorzugt, wenn die virtuelle Negativform des Schrittes b2') eine Oberfläche aufweist, welche sich in eine Innenseite mit dem Abdruck der SOLL-Position und eine der Innenseite gegenüberliegende Außenseite unterteilt, wobei jeder Punkt der Innenseite nicht mehr als 4 cm, insbesondere nicht mehr als 3 cm, vorzugsweise nicht mehr als 2 cm, von dem nächstliegenden Punkt der Außenseite entfernt ist.

Erfindungsgemäß wird die, insbesondere elastische, zweite physische Form indirekt zur Herstellung der dritten physischen Form genutzt, wobei zwischen Schritt c) und d) der folgende Schritt umfasst ist:
c2) Anfertigung einer, insbesondere zweiteiligen, Gussform auf Basis der zweiten physischen Form, insbesondere mittels Abformtechniken unter Verwendung von Abformmaterial, vorzugsweise gipsbasierten Abformmaterial, insbesondere wobei die zweite physische Form erhalten bleibt, vorzugsweise für die Erstellung weiterer Gussformen.

Der Schritt c) kann auch als Schritt c1) bezeichnet werden, auf den der Schritt c2), insbesondere unmittelbar, folgt. Vorzugsweise folgen die Schritte c1), c2) und d) unmittelbar aufeinander.

Diese Anfertigung der Gussform gemäß Schritt c2) erfolgt mittels Abformtechnik vorzugsweise über die nachfolgenden Schritte in der genannten Reihenfolge:
- Einbringen der zweiten physischen Form in ein Gefäß mit Abformmaterial, so dass die zweite physische Form beim Einbringen, insbesondere Eintauchen, in dem Abformmaterial teilweise eingeschlossen wird,
- Behandlung der Oberfläche des Abformmaterials mit einem Isoliermaterial, insbesondere Isolierlack,
- Auffüllen des Gefäßes mit dem Abformmaterial, so dass die zweite physische Form vollständig eingeschlossen wird,
- Aushärten des Abformmaterials, insbesondere bei Temperaturen von mindestens 35°C, vorzugsweise mindestens 70°C, insbesondere in einem erhitzten Wasserbad,
- Entfernen der zweiten physischen Form, so dass das zurückbleibende Abformmaterial eine physische Positivform als, insbesondere zweiteilige, Gussform der SOLL-Position ausbildet, insbesondere so dass das ausgehärtete Abformmaterial nicht beschädigt wird.

Besagte Entfernung kann, wie vorstehend ausgeführt, so erfolgen, dass die, insbesondere elastische, zweite physische Form nicht zerstört wird. Alternativ kann eine Zerstörung der zweiten physischen Form, insbesondere bestehend aus oder umfassend Wachs, beim Entfernen erfolgen.

Vorzugweise wird die Gussform in Schritt c2) mittels Abformtechniken erzeugt, insbesondere unter Verwendung eines Abformmaterials, welches im ausgehärteten Zustand weniger elastisch als das Material der zweiten physischen Form ist. In einer besonders geeigneten Ausgestaltung kann das Abformmaterial Gips sein. Damit widersteht es besonders gut der, insbesondere elastischen, zweiten physischen Form.

In einer weiteren Ausgestaltung des indirekten Verfahrens ist es vorgesehen, dass die zweite physische Form elastisch ist. Es hat sich überraschenderweise gezeigt, dass elastische zweite physische Formen unerwartet gut für das Verfahren geeignet sind. Der damit verbundene technische Effekt ist, dass die zweite physische Form aus dem, insbesondere gipsbasierten, Abformmaterial entfernt werden kann, ohne dass die zweite physische Form oder das, insbesondere gipsbasierte, Abformmaterial beschädigt werden. Besonders der Umstand, dass der verbleibende Hohlraum des, insbesondere gipsbasierten, ausgehärteten Abformmaterials beim Entfernen der elastischen zweiten physischen Form nicht beschädigt wird, hat uns überrascht. Damit kann die elastische zweite physische Form überraschenderweise wiederverwendet werden, beispielsweise falls das ausgehärtete, insbesondere gipsbasierten, Abformmaterial beschädigt wird oder nicht mehr zur Verfügung steht. Auch ist es bevorzugt, wenn die zweite physische Form bei der Herstellung der dritten physischen Form nicht beschädigt wird, insbesondere unverändert nochmals verwendet werden kann.

In einer alternativen Ausgestaltung des indirekten Verfahrens hat sich auch eine zweite physische Form aus Wachs oder umfassend Wachs, insbesondere für das vorstehend beschriebene indirekte Verfahren, als geeignet erwiesen. Vorzugsweise besteht die zweite physische Form in einer Ausgestaltung aus Wachs. Hierbei wird die zweite physische Form aus Wachs vorzugsweise im 3D-Druckverfahren als Negativform erzeugt. Eine Wiederverwendung ist bei Verwendung von Wachs regelmäßig nicht möglich, da die zweite physische Form beim Erstellen der Gussform, insbesondere unter Verwendung von gipsbasierten Abformmaterialien, unter Erwärmung zum Zwecke der Entfernung verflüssigt und somit zerstört wird.

Auch ist es bevorzugt, wenn die zweite physische Form des Schritts c) beim indirekten Verfahren eine Oberfläche aufweist, welche eine sich in eine Innenseite mit dem Abdruck der SOLL-Position und eine der Innenseite gegenüberliegende Außenseite unterteilt, wobei jeder Punkt der Innenseite nicht mehr als 4 cm, insbesondere nicht mehr als 3 cm, vorzugsweise nicht mehr als 2 cm, von dem nächstliegenden Punkt der Außenseite entfernt ist. Dies hat den Vorteil, dass der Positioner am Ende die richtige Dimensionierung aufweist, um in den Mund zu passen.

Auch ist es bevorzugt, wenn die durchschnittliche Shorehärte nach ASTM D-2240 gemessen an der Oberfläche im Bereich von 50 bis 100, insbesondere 60 bis 95, vorzugsweise 70 bis 85, liegt. Es hat sich gezeigt, dass diese Shorehärte überraschend besonders detaillierte Abdrücke ermöglicht und gleichzeitig eine Entfernung aus Abformmaterial besonders einfach ist.

In einer geeigneten Ausgestaltung weist die zweite physische Form Materialien auf, die nicht zur dauerhaften Verwendung im Mundraum bei Kontakt mit der Schleimhautmembran zugelassen sind, insbesondere nicht für die Verwendung für einen Zeitraum der größer als drei Monate ist. Vorzugsweise ist es ein Material, das den Voraussetzungen von ISO EN ISO 10993-1 (Ausgabedatum 2010-04) nicht entspricht. Es hat sich gezeigt, dass dies die Kosten senkt, da die zweite physische Form mit dem Mundraum nicht in Kontakt kommt und daher günstigere Materialien verwendet werden können.

Vorzugsweise wird die dritten physische Form mittels der Gussform aus Schritt c2) oder der im Anschluss an Schritt b2) hergestellten physischen Gussform in Schritt d) erzeugt, indem ein Material, insbesondere Silikon, in besagte Gussform eingebracht und ausgehärtet wird, wobei das ausgehärtete Material vorzugsweise noch elastisch ist. Das ausgehärtete Material bildet dann beim Entfernen die dritte physische Form, insbesondere den fertigen oder noch zu bearbeitenden Positioner.

Vorzugsweise läuft die Erstellung, insbesondere in Schritt d), einer dritten physischen Form, die eine Negativform der SOLL-Position ist, insbesondere unter indirekter Nutzung der zweiten physischen Form gemäß Schritt c) und direkter Nutzung der zweiteiligen Gussform gemäß Schritt c2), über die nachfolgenden Schritte in der genannten Reihenfolge ab:
- eine ersten Komponente und eine zweite Komponente, insbesondere jeweils enthaltend Silikon, werden gemischt, insbesondere in einem Vakuumgerät, oder es wird eine fertige Zusammensetzung, insbesondere enthaltend Silikon, bereitgestellt,
- die besagte Mischung oder fertige Zusammensetzung wird in eine zweiteilige Gussform, vorzugsweise die Gussform welche durch Schritt b2) oder c2) erhalten wurde, eingebracht,
- die beiden Teile der Gussform werden zusammengepresst und vorzugsweise miteinander fixiert,
- die Gussform wird mit der Mischung erwärmt, insbesondere bei mindestens 100°C, vorzugsweise 150 bis 250°C, für eine erste Zeitdauer,
- die dritte physische Form wird aus der Gussform entfernt, wobei die beiden Teile der Gussform wieder getrennt werden,
- vorzugsweise Tempern der dritten physischen Form, insbesondere bei mindestens 100°C, vorzugsweise 150 bis 250°C, für eine zweite Zeitdauer, welche bevorzugt länger als die erste Zeitdauer ist.

In einer geeigneten Ausgestaltung enthält die erste Komponente eine Base und die zweite Komponente einen Katalysator, wobei es sich vorzugsweise um silikonhaltige Komponenten handelt. Ferner ist es bevorzugt, wenn die erste Zeitdauer kürzer als die zweite Zeitdauer ist, insbesondere um ein Vielfaches kürzer.

Auch ist es bevorzugt, wenn sich an den Schritt d) mindestens einer der folgenden Schritte, insbesondere in dieser Reihenfolge, anschließt:
d2) Bearbeitung der dritten physischen Form mit einem Schleifkörper,
d3) Reinigung der dritten physischen Form, insbesondere im Ultraschallbad,
d4) Lackierung der dritten physischen Form und Härtung der Lackierung, insbesondere mittels Tempern bei 100°C bis 200°C für 2 bis 35 min.

Der Schritt d) kann auch als Schritt d1) bezeichnet werden, auf den der Schritt d2), insbesondere unmittelbar, folgt. Es hat sich gezeigt, dass die in Schritt d) erhaltene dritte physische Form weiter verbessert werden kann, indem eine Bearbeitung mit einem Schleifkörper gemäß Schritt d2) erfolgt. Hierbei werden, insbesondere durch den 3D-Druck bedingte, Unebenheiten entfernt, welche den Patienten beim Tragen des Positioners stören oder gar verletzen könnten. Die Reinigung ist vorteilhaft, da von den vorangegangenen Schritten Verunreinigungen entfernt werden. Eine Lackierung hat sich als vorteilhaft erwiesen, um eine hohe Bioverträglichkeit und Haltbarkeit zu gewährleisten. Die dritte physische Form entspricht dem fertigen Positioner oder einem Positioner, der noch nachbearbeitet werden muss, insbesondere durch einen oder mehrere der Schritte d2) bis d4).

Ferner ist es in einer geeigneten Ausgestaltung vorgesehen, dass das Volumen der zweiten physischen Form nicht mehr als 15 %, insbesondere nicht mehr als 5 %, vorzugsweise nicht mehr als 2 %, vom Volumen der dritten physischen Form abweicht, insbesondere wobei die dritte physische Form dieselbe räumliche Gestalt wie die zweite physische Form aufweist. Das Volumen wird dabei bestimmt, indem der Messkörper, d.h. die zweite oder dritte physische Form, in ein Wasserbad eingetaucht wird, wobei die Änderung der Höhe des Bads genutzt wird, um die Volumenänderung zu bestimmen. Mit dem Verfahren können auch sehr kleine Volumenänderungen exakt bestimmt werden. In einer geeigneten Ausgestaltung ist das Volumen von Positioner und zweiter Form gleich groß und weist die gleiche Formgebung auf, so dass sich die Unterschiede daraus ergeben, dass unterschiedliches Material verwendet wird. Dieselbe räumliche Gestalt liegt dann vor, wenn die Abweichungen in der dreidimensionalen räumlichen Ausdehnung zwischen der zweiten und dritten Form unwesentlich sind, insbesondere vorwiegend oder nur auf verfahrensbedingte unabsichtliche Ungenauigkeiten zurückzuführen sind. Die Formen sehen in diesem Fall, abgesehen von farblichen Unterschieden, ähnlich aus.

Vorzugsweise besteht die dritte physische Form aus Silikon oder umfasst Silikon. Insbesondere bevorzugt wird ein Vinyl-Polysiloxan verwendet. Vorstehend genannte Materialien sind besonders geeignet für Positioner.

Auch hat es sich als vorteilhaft erwiesen, wenn die dritte physische Form elastisch ist. Dies mindert die Verletzungsgefahr.

Vorzugsweise erfolgen die in der Patentschrift genannten Schritte in der genannten Reihenfolge, d.h. auf Schritt a1) folgt a2) bzw. auf Schritt a) folgt Schritt b), wobei Zwischenschritte nicht ausgeschlossen sind. Vorzugsweise folgen die Schritte jedoch unmittelbar aufeinander.

In einer Ausgestaltung des Verfahrens haben sich insbesondere Polymethylmethacrylat und/oder Polyurethan als geeignet für die zweite physische Form als Negativform erwiesen. Mit den genannten Kunststoffen lassen sich besonders gut im 3D- Druckverfahren elastische und hinreichend widerstandfähige Formkörper erzeugen.

Die zweite physische Form ist vorzugsweise eine elastische Zahnabdruckform als Negativform zur Herstellung von einem Positioner gemäß dem vorstehend beschriebenen Verfahren. Die elastische Zahnabdruckform ist dabei selbst kein Positioner. Vorzugsweise ist die zweite elastische Zahnabdruckform ungeeignet, um als Positioner verwendet zu werden, beispielsweise da die Stabilität nicht hinreichend ist oder Giftstoffe enthalten sind. Vorteile und Eigenschaften der elastischen Zahnabdruckform, welche nachstehend offenbart werden, sind daher auch Vorteile und vorteilhafte Eigenschaften der zweiten physischen Form, wie vorstehend diskutiert.

Die zweite physische Form in Form der elastischen Zahnabdruckform als Negativform umfasst vorzugsweise ein elastisches Primärmaterial als Obermaterial und ein weniger elastisches Sekundärmaterial als Stützmaterial. Ein Obermaterial ist dabei ein Material, welches die Oberfläche zumindest teilweise ausbildet, vorzugsweise die gesamte Oberfläche ausbildet. Das Stützmaterial ist dabei ein Material, welches den Kern der elastischen Zahnabdruckform ausbildet, insbesondere die Bestandteile, die nicht durch das Obermaterial an der Oberfläche ausgebildet sind. Vorzugsweise ist der Gewichtsanteil des Stützmaterials größer als der Gewichtsanteil des Obermaterials, insbesondere um mindestens 50%, vorzugsweise mindestens 100%, insbesondere mindestens 150% größer.

In einer weiteren geeigneten Ausgestaltung des Verfahrens ist es vorgesehen, dass das Primärmaterial ein Epoxidharz ist oder umfasst. Es hat sich gezeigt, dass Epoxidharze besonders gute Ergebnisse hinsichtlich der Elastizität und Wiederverwertbarkeit aufweisen. Daher kann die elastische Zahnabdruckform archiviert werden, um ggf. erneut genutzt zu werden, um einen (Ersatz-)Positioner herzustellen.

In einer weiteren Ausgestaltung des Verfahrens ist es vorgesehen, dass das Primärmaterial und/oder das Sekundärmaterial Kunststoffe, insbesondere Photopolymere, umfassen oder sind. Es hat sich gezeigt, dass mit 3D-Druckverfahren, insbesondere Polygrafie, hervorragende Ergebnisse erzielt werden. Photopolymere sind Polymere die durch Photopolymerisierung entstehen, vorzugsweise durch photochemische Härtung des Ausgangsmaterials, insbesondere von Monomeren und/oder Oligomeren sowie Photoinitiatoren, durch Vernetzung unter Einwirkung von Licht, insbesondere Laserlicht und/oder UV-Licht. Besondere bevorzugt ist UV-Laserlicht. Laserlicht ist Licht, dass mit einem Laser erzeugt wurde.

Ferner ist es bevorzugt, wenn das Primärmaterial im polymerisierten Zustand ein spezifische Dichte von 0.7 bis 1.5 g/cm³, vorzugsweise 1.0 bis 1.2 g/cm³, insbesondere bevorzugt 1.1 bis 1.15 g/cm3 aufweist (ASTM D792).

Auch ist es bevorzugt, wenn die durchschnittliche Shorehärte nach ASTM D-2240 des Obermaterials, insbesondere der Oberfläche, im Bereich von 50 bis 100, insbesondere 60 bis 95, vorzugsweise 70 bis 85, liegt.

In einer geeigneten Ausgestaltung des Verfahrens weist die elastische Zahnabdruckform Materialien auf, die nicht zur dauerhaften Verwendung im Mundraum bei Kontakt mit der Schleimhautmembran zugelassen sind, insbesondere nicht für die Verwendung für einen Zeitraum der größer als drei Monate ist. Vorzugsweise ist es ein Material, das den Voraussetzungen von ISO EN ISO 10993-1 (**Ausgabedatum** 2010-04) nicht entspricht. Es hat sich gezeigt, dass dies die Kosten senkt, da die elastische Zahnabdruckform mit dem Mundraum nicht in Kontakt kommt und daher günstigere Materialien verwendet werden können.

Der Erfindung liegt die Erkenntnis zu Grunde, dass 3D-Druckverfahren sich nutzen lassen, um Hilfsmittel für die Herstellung von Positioner bereitzustellen. Überraschend hat sich dabei herausgestellt, dass indirekte Lösungswege und insbesondere elastische zweite Formkörper bzw. elastische Zahnabdruckformen mit einer spezifischen durchschnittlichen Shorehärte das Verfahren erheblich verbessern. Weitere Verbesserungen sind vorstehend im Detail beschrieben worden.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigt:
- Figur 1: ein Verfahrensschema für die Herstellung eines individuell angepassten Positioners unter direkter Nutzung der zweiten physischen Form (erste Verfahrensvariante);
- Figur 2: ein Verfahrensschema für die Herstellung eines individuell angepassten Positioners unter indirekter Nutzung der zweiten physischen Form (zweite Verfahrensvariante);
- Figur 3: eine schematische perspektivische Ansicht der ersten physischen Form;
- Figur 4: eine schematische Darstellung der Verformung der virtuellen Positivform der IST-Position, so dass die Zähne der virtuellen Positivform in eine SOLL-Position gebracht werden;
- Figur 5: eine schematische perspektivische Ansicht der zweiten physischen Form als Negativform;
- Figur 6: eine schematische Ansicht des zurückbleibenden Abformmaterials zw. der Gussform;
- Figur 7: eine schematische perspektivische Ansicht der dritten physischen Form.

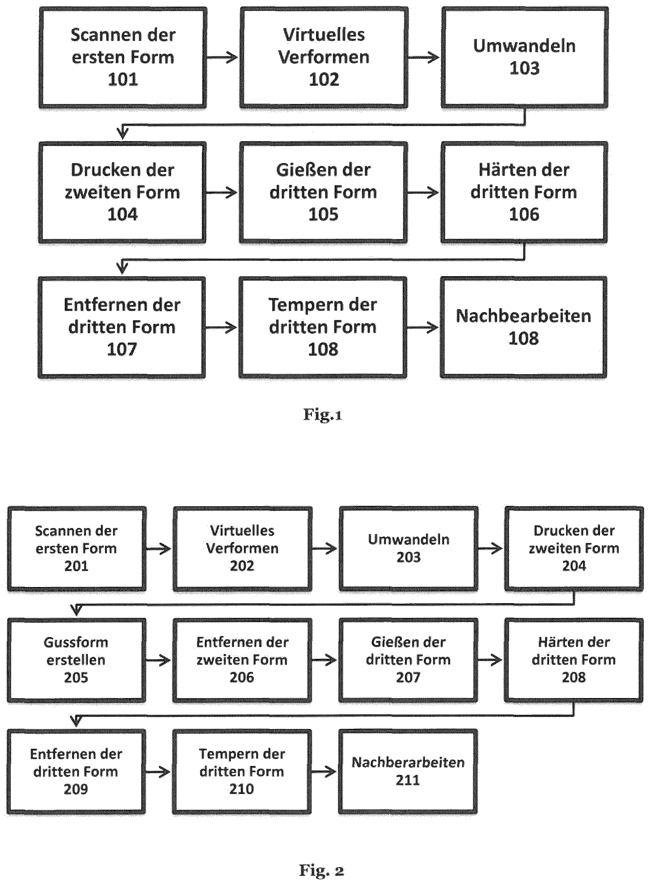

Figur 1 zeigt den schematischen Verfahrensablauf bei der direkten Nutzung der zweiten physischen Form zur Herstellung der dritten physischen Form. Zuerst erfolgt das Scannen (101) einer ersten physischen Form, die eine Positivform der IST-Position der Zahnreihen ist, und Erstellung einer ersten virtuellen Positivform der IST-Position. Dies kann beispielsweise anhand eines Gipsabdrucks erfolgen, der durch mit Abformmaterial gefüllte Löffel hergestellt wurde, oder durch direktes Scannen eines menschlichen Gebisses mit einem Intraoralscanner. Anschließend werden die Daten im Computer verarbeitet und ein virtuelles Modell der gescannten Positivform erstellt. Es erfolgt ein virtuelles Verformen (102) der virtuellen Positivform der IST-Position, so dass die Zähne der virtuellen Positivform in eine SOLL-Position gebracht werden. Anschließend erfolgt eine Umwandlung (103) der virtuellen Positivform in der SOLL-Position in eine virtuelle Gussform für die dritte physische Form. Diese wird mittels eines 3D-Druckverfahrens ausgedruckt (104), wobei sich hier Druckverfahren als geeignet erwiesen haben, die hitzebeständige Gussformen drucken. Beispielhaft seien Gussformen aus Polymergips genannt. Anschließend erfolgt das Gießen (105) der dritten physischen Form. Obgleich hier der Begriff "Gießen" verwendet wird, umfasst dies auch das Einbringen von Pasten z. B. mit einem Spatel. Als besonders geeignet haben sich Zweikomponentenmischungen mit Silikon erwiesen, die als Paste in die Gussform eingebracht werden. Beispielsweise kann Dentalsilikon eingesetzt werden. Anschließend erfolgt das Härten (106) bei erhöhter Temperatur für eine erste Zeitdauer, insbesondere bei 200°C für 45 Minuten. Die dritte physische Form wird entfernt (107) und für eine zweite Zeitdauer Erwärmt (108), insbesondere bei 200°C für 2 Stunden. Eine Nachbearbeitung (109) kann mit einem Schleifkörper und durch Lackierung erfolgen.

Figur 2 zeigt den schematischen Verfahrensablauf bei der indirekten Nutzung der zweiten physischen Form zur Herstellung der dritten physischen Form. Zuerst erfolgt das Scannen (201) einer ersten physischen Form, die eine Positivform der IST-Position der Zahnreihen ist, und Erstellung einer ersten virtuellen Positivform der IST-Position. Dies kann beispielsweise anhand eines Gipsabdrucks erfolgen, der durch mit Abformmaterial gefüllte Löffel hergestellt wurde, oder durch direktes Scannen eines menschlichen Gebisses mit einem Intraoralscanner. Anschließend werden die Daten im Computer verarbeitet und ein virtuelles Modell der gescannten Positivform erstellt. Es erfolgt ein virtuelles Verformen (202) der virtuellen Positivform der IST-Position, so dass die Zähne der virtuellen Positivform in eine SOLL-Position gebracht werden. Anschließend erfolgt eine Umwandlung (203) der virtuellen Positivform mit der SOLL-Position in eine virtuelle Negativform der SOLL-Position (203). Diese wird mittels eines 3D-Druckverfahrens ausgedruckt (204), wobei sich hier Druckverfahren als geeignet erwiesen haben, die eine Photopolymerisierung nutzen. Die so erhaltene zweite physische Form wird genutzt, um die Gussform zu erstellen (205). Hierbei wird die zweite physische Form in ein Gefäß mit Abformmaterial eingebracht, so dass die zweite physische Form beim Eintauchen in dem Abformmaterial teilweise eingeschlossen wird. Anschließend erfolgt eine Behandlung der Oberfläche des Abformmaterials mit einem Isolierlack, um zu verhindern, dass die beiden Hälften der Gussform untrennbar verbunden werden. Anschließend wird das Gefäß mit dem Abformmaterial gefüllt, so dass die zweite physische Form vollständig eingeschlossen ist. Es erfolgt ein Aushärten des Abformmaterials und anschließendes Entfernen (206) der zweiten physischen Form, so dass das zurückbleibende Abformmaterial eine physische Positivform als zweiteilige Gussform der SOLL-Position ausbildet. Anschließend erfolgt das Gießen (207) der dritten physischen Form unter direkter Nutzung der Gussform. Obgleich hier der Begriff "Gießen" bzw. "Gussform" verwendet wird, umfasst dies auch das Einbringen von Pasten, welches auch die bevorzugt verwendete Technik ist. Beispielsweise kann Dentalsilikon eingesetzt werden. Es erfolgt das Härten (208) bei erhöhter Temperatur für eine erste Zeitdauer, insbesondere bei 200°C für 45 Minuten. Die dritte physische Form wird entfernt (209) und für eine zweite Zeitdauer erwärmt (210), insbesondere bei 200°C für 2 Stunden. Eine Nachbearbeitung (211) kann mit einem Schleifkörper und durch Lackierung erfolgen.

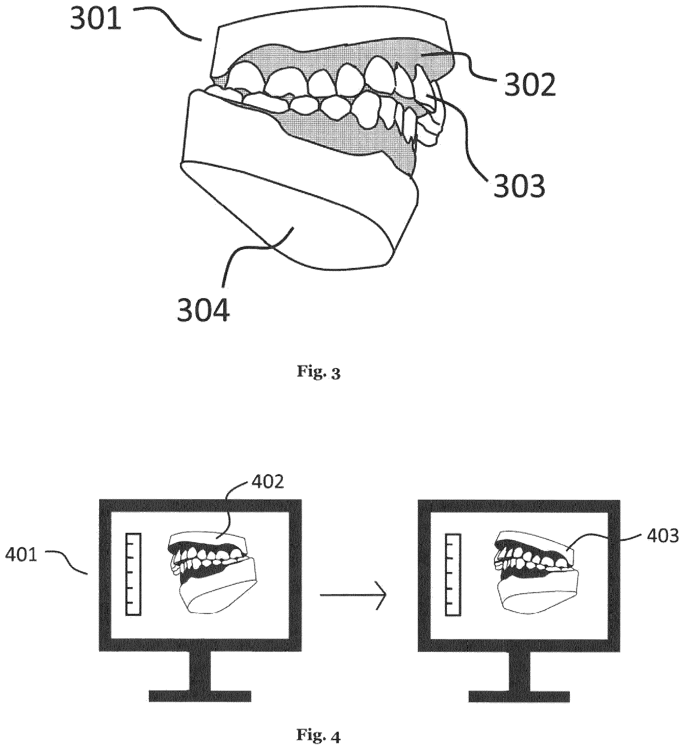

Figur 3 zeigt eine schematische perspektivische Ansicht der ersten physischen Form (301). Hierbei handelt es sich um einen physischen Gebissabdruck der IST-Position der Zahnreihen als physische Positivform der IST-Position der Zahnreihen, insbesondere aus Gips oder Kunststoff, die mithilfe der Löffelabdruck-Technik erstellt wurde. Die hier wiedergegebene erste physische Form (301) weist Abbilder der Zähne (303) sowie eines Teilbereiches des Zahnfleisches (302) auf. Sie wird stabilisiert durch einen Sockel (304).

Figur 4 zeigt eine schematische Darstellung der Verformung der virtuellen Positivform der IST-Position, so dass die Zähne der virtuellen Positivform in eine SOLL-Position gebracht werden. Die virtuelle Positivform ist auf einem Monitor (401) darstellbar und wird von der IST-Position (402) in die SOLL-Position (403) verformt.

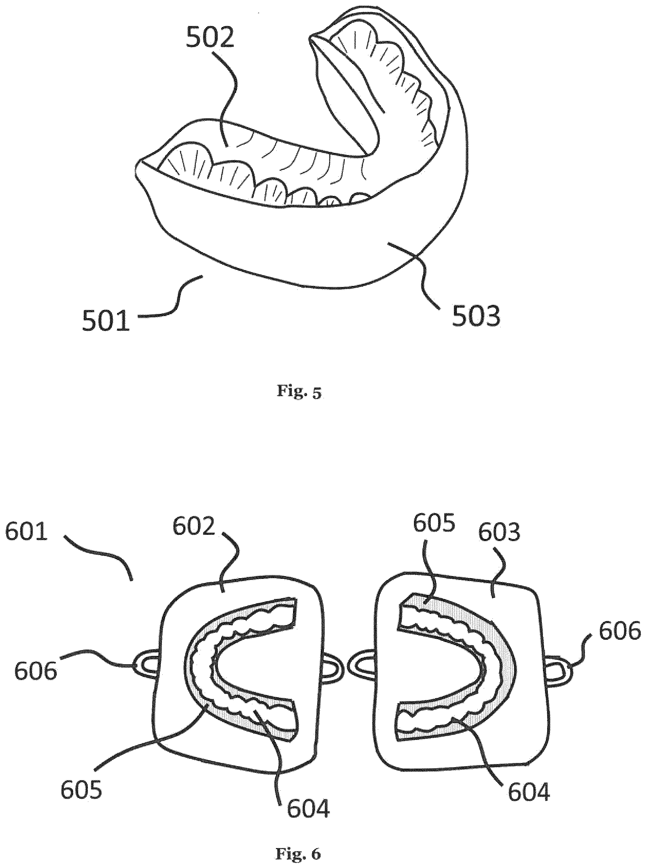

Figur 5 zeigt eine schematische perspektivische Ansicht der zweiten physischen Form (501) als Negativform. Diese Negativform wurde durch eine Umwandlung der virtuellen Positivform mit der SOLL-Position aus Fig. 4 in eine virtuelle Negativform und dem anschließenden Ausdrucken mit einem 3D-Drucker erhalten. Sie weist eine Innenseite (502) und eine Außenseite (503) auf. Sichtbar ist nur der Abdruck der oberen Zahnreihe, wobei sich der Abdruck der unteren Zahnreihe auf der gegenüberliegenden nicht dargestellten Seite befindet.

Figur 6 zeigt eine schematische Ansicht des zurückbleibenden Abformmaterials, wenn eine Gussform (601) mit der zweiten physischen Form (501) aus Fig. 5 hergestellt wird.

Die zweiteilige Gussform (601) weist Befestigungsmittel (606) auf, mit welchen die beiden Hälften der Gussform (601) aneinander fixiert werden können. In der Gussform sind die Abbilder der Zahnreihen (604) als Positivform enthalten. Um die Zahnreihen herum befinden sich jeweils Vertiefungen (605), die bei geschlossener zweiteiliger Gussform (601) einen geschlossenen Hohlraum bilden. Der Hohlraum weist den Umriss der dritten physischen Form auf, so dass diese entsteht, wenn die Gussform gattungsgemäß benutzt wird. Die Flächen (602, 603) sind entstanden, da ein Isolierlack beim Herstellen der Gussform verwendet wurde.

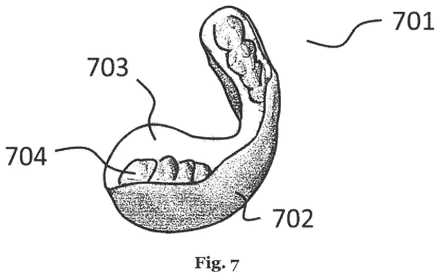

Figur 7 zeigt eine schematische perspektivische Ansicht der dritten physischen Form (701). Diese entspricht schon im Wesentlichen dem fertigen Positioner, wobei noch eine Nachbearbeitung erfolgen kann. Sichtbar sind die Aussparungen (704) auf der Innenseite (703) für die obere Zahnreihe, wobei die untere Zahnreihe nicht sichtbar ist. Ebenfalls wiedergegeben ist die Außenseite (702)

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verfahren für die Herstellung von individuell angepassten Positionern für Zähne, umfassend die folgenden Schritte:
a) Scannen einer ersten physischen Form in der IST-Position der Zahnreihen und Erstellung einer virtuellen Positivform in der IST-Position,
b) Verformen der virtuellen Positivform in der IST-Position, so dass die Zähne der virtuellen Positivform in eine SOLL-Position gebracht werden,
b2') digitale Modellierung einer virtuellen Negativform der SOLL-Position auf Basis der virtuellen Positivform der SOLL-Position, wobei der Schritt b2') zwischen Schritt b) und c) umfasst ist,
c) Drucken einer zweiten physischen Form in der SOLL-Position mittels 3D-Druck, wobei die zweite physische Form der SOLL-Position eine Negativform darstellt, welche auf Basis des Datensatzes der virtuellen Negativform der SOLL-Position gedruckt wird,
c2) Anfertigung einer Gussform auf Basis der zweiten physischen Form, wobei der Schritt c2) zwischen Schritt c) und d) umfasst ist, und
d) Erstellung einer dritten physischen Form in der SOLL-Position als Negativform unter indirekter, insbesondere zerstörungsfreier, Nutzung der zweiten physischen Form, wobei die dritte physische Form unter direkter Nutzung der Gussform gemäß Schritt c2) hergestellt wird.

2. Verfahren nach Anspruch 1, **dadurch gekennzeichnet, dass** sich an Schritt d) mindestens einer der folgenden Schritte anschließt:
d2) Bearbeitung der dritten physischen Form mit einem Schleifkörper,
d3) Reinigung der dritten physischen Form, insbesondere im Ultraschallbad,
d4) Lackierung der dritten physischen Form und Härtung der Lackierung, insbesondere mittels Tempern bei 150°C bis 250°C für 2 bis 35 min.

3. Verfahren nach Anspruch 1 oder 2, **dadurch gekennzeichnet, dass** die zweite physische Form der SOLL-Position eine Negativform darstellt, welche elastisch ist.

4. Verfahren nach Anspruch 3, **dadurch gekennzeichnet, dass** zwischen Schritt c) und d) der folgende Schritt umfasst ist:
c2) Anfertigung einer, insbesondere zweiteiligen, Gussform auf Basis der zweiten physischen Form, wobei die zweite physische Form erhalten bleibt und elastisch ist,
wobei in Schritt d) die dritte physische Form unter direkter Nutzung der Gussform gemäß Schritt c2) hergestellt wird.

5. Verfahren nach einem der Ansprüche 1 bis 4, **dadurch gekennzeichnet, dass**
das Gussform in Schritt c2) mittels Abformtechniken erzeugt wird, insbesondere unter Verwendung eines Abformmaterials, welches, insbesondere im ausgehärteten Zustand, weniger elastisch als das Material der zweiten physischen Form ist.

6. Verfahren nach einem der Ansprüche 1 bis 5, **dadurch gekennzeichnet, dass** Volumen der zweiten physischen Form nicht mehr als 15 %, insbesondere nicht mehr als 5 %, vorzugsweise nicht mehr als 2 %, vom Volumen der dritten physischen Form abweicht, insbesondere wobei die dritte physische Form im Wesentlichen dieselbe räumliche Gestalt wie die zweite physische Form aufweist.

7. Verfahren nach einem der Ansprüche 1 bis 6, **dadurch gekennzeichnet, dass** die zweite physische Form Polymethylmethacrylat, Wachs und/oder Polyurethan umfasst oder aus diesem besteht.

8. Verfahren nach einem der vorangehenden Ansprüche, **dadurch gekennzeichnet, dass** die Erstellung einer dritten physischen Form, die eine Negativform der SOLL-Position ist, unter direkter oder indirekter Nutzung der zweiten physischen Form gemäß Schritt d) folgendermaßen abläuft:
• eine ersten Komponente und eine zweite Komponente werden gemischt, insbesondere in einem Vakuumgerät,
• die so erhaltene Mischung wird in eine zweiteilige Gussform, vorzugsweise die Gussform gemäß Schritt c2), eingebracht,
• die beiden Teile der Gussform werden zusammengepresst und vorzugsweise miteinander fixiert,
• die Gussform wird mit der Mischung erwärmt, insbesondere bei mindestens 100°C für eine erste Zeitdauer,
• die dritte physische Form wird aus der Gussform entfernt, wobei die beiden Teile der Gussform wieder getrennt werden, und
• vorzugsweise Tempern der dritten physischen Form, insbesondere bei mindestens 100°C für eine zweite Zeitdauer, welche bevorzugt länger als die erste Zeitdauer ist.

9. Verfahren nach einem der vorangehenden Ansprüche, **dadurch gekennzeichnet, dass** die zweite physische Form eine elastische Zahnabdruckform ist, wobei diese als Negativform vorliegt und ein elastisches Primärmaterial als Obermaterial und ein weniger elastisches Sekundärmaterial als Stützmaterial umfasst.

10. Verfahren nach Anspruch 9, **dadurch gekennzeichnet, dass** das Primärmaterial ein Epoxidharz ist oder umfasst,

11. Verfahren nach Anspruch 9 oder 10, **dadurch gekennzeichnet, dass** das Primärmaterial und/oder Sekundärmaterial Photopolymere umfassen oder sind.

12. Verfahren nach einem der Ansprüche 9 bis 11, **dadurch gekennzeichnet, dass** die durchschnittliche Shorehärte nach ASTM D-2240 des Obermaterials im Bereich von 50 bis 100, insbesondere 60 bis 95, vorzugsweise 70 bis 85, liegt.

## Claims

1. A method for the manufacture of individually fitted tooth positioners, comprising the following steps:
a) scanning a first physical mold in the actual position of the rows of teeth and creating a virtual positive mold in the actual position,
b) deforming the virtual positive mold in the actual position, such that the teeth of the virtual positive mold are brought into a target position,
b2') digital modeling of a virtual negative mold of the target position on the basis of the virtual positive mold of the target position, wherein step b2') being comprised between step b) and c),
c) printing a second physical mold in the target position by means of 3D printing, wherein the second physical mold of the target position is a negative mold, which is printed on the basis of the data set of the virtual negative mold of the target position,
c2) preparing a casting mold on the basis of the second physical mold, wherein step c2) being comprised between step c) and d), and
d) creating a third physical mold in the target position as a negative mold by indirectly, in particular non-destructively, using the second physical mold, wherein the third physical mold is manufactured by directly using the casting mold according to step c2).

2. The method according to Claim 1, **characterized in that** at least one of the following steps succeeds step d):
d2) machining of the third physical mold with an abrasive body,
d3) cleaning of the third physical mold, in particular in an ultrasonic bath,
d4) coating of the third physical mold and hardening of the coating, in particular by means of annealing at 150 °C to 250 °C for 2 to 35 min.

3. The method according to Claim 1 or 2, **characterized in that** the second physical mold of the target position is a negative mold which is elastic.

4. The method according to Claim 3, **characterized in that** the following step is comprised between step c) and d):
c2) preparing an, in particular two-part, casting mold on the basis of the second physical mold, wherein the second physical mold is retained and is elastic,
wherein in step d), the third physical mold is manufactured by directly using the casting mold according to step c2).

5. The method according to any one of Claims 1 to 4, **characterized in that** the casting mold is created in step c2) by means of molding techniques, in particular by utilizing a molding material which is, in particular in the hardened state, less elastic than the material of the second physical mold.

6. The method according to any one of Claims 1 to 5, **characterized in that** the volume of the second physical mold does not deviate from the volume of the third physical mold by more than 15 %, in particularly not more than 5 %, preferably not more than 2 %, in particular wherein the third physical mold has substantially the same spatial design as the second physical mold.

7. The method according to any one of Claims 1 to 6, **characterized in that** the second physical mold comprises or consists of polymethyl methacrylate, wax and/or polyurethane.

8. The method according to any one of the preceding claims, **characterized in that** the preparation of a third physical mold, which is a negative mold of the target position, proceeds, directly or indirectly using the second physical mold according to step d), as follows:
• a first component and a second component are mixed, in particular in a vacuum device,
• the thus obtained mixture is placed in a two-piece casting mold, preferably the casting mold according to step c2),
• the two parts of the casting mold are pressed together and preferably fastened to each other,
• the casting mold is heated with the mixture, in particular at 100 °C for a first temporal duration,
• the third physical mold is removed from the casting mold, wherein the two parts of the casting mold are again separated, and
• preferably annealing the third physical mold, in particular at least 100 °C for a second temporal duration, which is preferably longer than the first temporal duration.

9. The method according to any one of the preceding claims, **characterized in that** the second physical mold is an elastic tooth impression mold, wherein said tooth impression mold is present as a negative mold and comprises an elastic primary material as an outer material and a less elastic secondary material as a supporting material.

10. The method according to Claim 9, **characterized in that** the primary material is or comprises an epoxy resin.

11. The method according to Claim 9 or 10, **characterized in that** the primary material and/or secondary material is/are or comprise/comprises photopolymers.

12. The method according to any one of Claims 9 to 11, **characterized in that** the average Shore hardness according to ASTM D-2240 of the outer material is in the range of 50 to 100, in particular 60 to 95, preferably 70 to 85.

## Revendications

1. Procédé de fabrication de positionneurs adaptables individuellement à des dents, comprenant les étapes suivantes:
a) le scannage d'un premier moule physique dans la position réelle des rangées de dents et l'élaboration d'un moule positif virtuel dans la position réelle,
b) la déformation du moule positif virtuel dans la position réelle, de sorte que les dents du moule positif virtuel sont placées dans une position théorique,
b2') la modélisation numérique d'un moule négatif virtuel de la position théorique sur la base du moule positif virtuel de la position théorique, où l'étape b2') étant comprise entre les étapes b) et c),
c) l'impression d'un deuxième moule physique dans la position théorique au moyen d'une imprimante 3D, dans lequel le deuxième moule physique de la position théorique est un moule négatif, lequel est imprimé sur la base du jeu de données du moule négatif virtuel de la position théorique,
c2) la réalisation d'un moule de coulée sur la base du deuxième moule physique, où l'étape c2) étant comprise entre les étapes c) et d), et
d) l'élaboration d'un troisième moule physique dans la position théorique sous la forme d'un moule négatif moyennant l'utilisation indirecte, en particulier non destructive, du deuxième moule physique, dans lequel le troisième moule physique est fabriqué moyennant l'utilisation directe du moule de coulée suivant l'étape c2).

2. Procédé selon la revendication 1, **caractérisé en ce qu'**au moins une des étapes suivantes succède à l'étape d):
d2) l'usinage du troisième moule physique à l'aide d'une meule,
d3) le nettoyage du troisième moule physique, en particulier dans un bain à ultrasons,
d4) le vernissage du troisième moule physique et le durcissement du vernis, en particulier au moyen d'un recuit à une température de 150 °C à 250 °C durant 2 à 35 min.

3. Procédé selon la revendication 1 ou 2, **caractérisé en ce que** le deuxième moule physique de la position théorique est un moule négatif, qui est élastique.

4. Procédé selon la revendication 3, **caractérisé en ce que** l'étape suivante est comprise entre les étapes c) et d):
c2) la réalisation d'un moule de coulée, en particulier en deux parties, sur la base du deuxième moule physique, dans lequel le deuxième moule physique est conservé et élastique,
dans lequel le troisième moule physique est fabriqué moyennant l'utilisation directe du moule de coulée suivant l'étape c2) au cours de l'étape d).

5. Procédé selon l'une des revendications 1 à 4, **caractérisé en ce que** le moule de coulée est généré par des techniques de moulage au cours de l'étape c2), en particulier moyennant l'utilisation d'un matériau de moulage, lequel, en particulier à l'état durci, est moins élastique que le matériau du deuxième moule physique.

6. Procédé selon l'une des revendications 1 à 5, **caractérisé en ce que** le volume du deuxième moule physique ne diverge pas plus de 15 %, en particulier pas plus de 5 %, de préférence pas plus de 2 % du volume du troisième moule physique, en particulier dans lequel le troisième moule physique présente sensiblement la même forme spatiale que le deuxième moule physique.

7. Procédé selon l'une des revendications 1 à 6, **caractérisé en ce que** le deuxième moule physique comprend ou consiste en polyméthacrylate de méthyle, cire et/ou polyuréthane.

8. Procédé selon l'une quelconque des revendications précédentes, **caractérisé en ce que** l'élaboration d'un troisième moule physique, qui est un moule négatif de la position théorique, se déroule moyennant l'utilisation directe ou indirecte du deuxième moule physique suivant l'étape d) de la manière suivante:
• une première composante et une seconde composante sont mélangées, en particulier dans un appareil sous vide,
• le mélange ainsi obtenu est introduit dans un moule de coulée en deux parties, de préférence le moule de coulée suivant l'étape c2),
• les deux parties du moule de coulée sont comprimées et de préférence fixées l'une à l'autre,
• le moule de coulée est échauffé avec le mélange, en particulier à une température d'au moins 100 °C pendant une première période,
• le troisième moule physique est retiré du moule de coulée, dans lequel les deux parties du moule de coulée sont de nouveau séparées, et
• de préférence le recuit du troisième moule physique, en particulier à une température d'au moins 100 °C pendant une seconde période, laquelle est de préférence plus longue que la première période.

9. Procédé selon l'une quelconque des revendications précédentes, **caractérisé en ce que** le deuxième moule physique est un moule d'empreinte dentaire élastique, dans lequel celui-ci est disponible sous la forme d'un moule négatif et comprend un matériau primaire élastique servant de matériau supérieur et un matériau secondaire moins élastique servant de matériau de support.

10. Procédé selon la revendication 9, **caractérisé en ce que** le matériau primaire est ou comprend une résine époxyde.

11. Procédé selon la revendication 9 ou 10, **caractérisé en ce que** le matériau primaire et/ou le matériau secondaire comprennent ou sont des photopolymères.

12. Procédé selon l'une des revendications 9 à 11, **caractérisé en ce que** la dureté de Shore moyenne selon la norme ASTM D-2240 du matériau supérieur se situe dans la plage de 50 à 100, en particulier de 60 à 95, de préférence de 70 à 85.
